(19) **Europäisches Patentamt**

**European Patent Office**

**Office européen des brevets**

(11) **EP 1 489 433 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
*G01S 13/93* *(2006.01)*     *G01S 15/87* *(2006.01)*
*G01S 13/87* *(2006.01)*     *G01S 15/93* *(2006.01)*

(21) Anmeldenummer: **04014165.7**

(22) Anmeldetag: **17.06.2004**

(54) **Verfahren zur Objektabtastung für Kraftfahrzeuge**

Method of detecting objects for a vehicle

Méthode de détection d'objets pour véhicule

(84) Benannte Vertragsstaaten:
**DE FR GB IT**

(30) Priorität: **18.06.2003 DE 10327459**

(43) Veröffentlichungstag der Anmeldung:
**22.12.2004 Patentblatt 2004/52**

(73) Patentinhaber: **AUDI AG**
**85045 Ingolstadt (DE)**

(72) Erfinder:
• **Erlacher, Markus**
**85077 Manching (DE)**
• **Sprickmann Kerkerinck, Paul**
**85049 Ingolstadt (DE)**

(74) Vertreter: **Thielmann, Frank**
**AUDI AG,**
**Patentabteilung I/EX**
**85045 Ingolstadt (DE)**

(56) Entgegenhaltungen:
**EP-A- 0 970 390**     **EP-A- 1 058 126**
**US-A- 4 910 512**     **US-B1- 6 384 718**

**Beschreibung**

Die Erfindung betrifft ein Kraftfahrzeug mit wenigstens drei Sensoren zur Abstandsermittlung zu einem benachbarten Objekt, wobei jeder Sensor ein Sendesignal aussendet, ein vom Objekt reflektiertes Reflexionssignal empfängt und basierend darauf ein separates Sensorsignal, das ein Maß für den Abstand des Sensors zum Objekt ist, liefert, und einem den Sensorbetrieb und die Signalverarbeitung steuernden Steuergerät.

Kraftfahrzeuge werden zunehmend beispielsweise mit einem sogenannten "Abstandswarnsystem" ausgerüstet, welches mehrere in der Regel in der hinteren, gegebenenfalls auch der vorderen Stoßstange integrierte Sensoren umfasst, die Signale aussenden und von einem sich möglicherweise im Abtastbereich befindlichen Objekt reflektierte Reflexionssignale aufnehmen. Anhand der Reflexionssignale ist es dann möglich, den Abstand zum Objekt festzustellen, so dass der Fahrer gewarnt werden kann, wenn er sich zu nahe am Objekt befindet. Die Warnung kann dabei optisch in Form geeigneter Leuchtsignale oder akustisch in Form von Warntönen gegeben werden. In der Regel erfolgt die Abstandsmessung auf Basis einer Laufzeitmessung des ausgesendeten Signals im Verhältnis zu einem Referenzsignal. Bekannt ist die Verwendung von Radarsensoren, aber auch andere Sensoren wie z. B. Ultraschallsensoren sind bekannt.

Bei bekannten Systemen misst jeder Sensor den Abstand zu einem Objekt, wozu er ein eigenes Sendesignal aussendet und das darauf basierende Empfangssignal aufnimmt und auswertet. Man erhält also beispielsweise bei einer Integration von vier Sensoren maximal vier Abstandswerte, die vier Abtastorten am möglichen Objekt entsprechen.

Damit liefern bekannte Abstandswarnsysteme lediglich eine Anzahl von Abstandswerten, die der Anzahl der Radarsensoren entspricht. Das bedeutet jedoch, dass die bekannten Systeme insgesamt eine relativ schlechte Ortsauflösung aufweisen, da bezogen auf die Länge der Stoßstange, über die die Sensoren verteilt angeordnet sind, lediglich eine geringe maximale Zahl an Messpunkten gegeben ist. Dabei wird die Ortsauflösung umso schlechter, je weiter die Sensoren voneinander entfernt sind.

EP-A-970 390 offenbart ein Kraftfahrzeug, bzw. Verfahren nach dem Oberbegriff der Ansprüche 1, 13.

Der Erfindung liegt das Problem zugrunde, ein Kraftfahrzeug mit einem Abstandserfassungssystem anzugeben, das eine Objektabtastung mit höherer Ortsauflösung ermöglicht.

Zur Lösung dieses Problems ist bei einem Kraftfahrzeug der eingangs genannten Art erfindungsgemäß vorgesehen, dass das Steuergerät in einem Sende- und Empfangszyklus lediglich einen Sensor zum Aussenden des Sendesignals und zusätzlich zu diesem anschließend alle weiteren Sensoren zum Empfangen von Reflexionssignalen auf Basis des einen Sendesignals ansteuert, wobei das Steuergerät in mehreren Sende- und Empfangszyklen nacheinander alle Sensoren zum Aussenden ansteuert.

Anders als bei bekannten Systemen, bei denen gleichzeitig alle Sensoren senden und alle gleichzeitig das zum eigenen Sendesignal gehörende Reflexionssignal messen, ist beim erfindungsgemäßen Kraftfahrzeug vorgesehen, dass lediglich ein Sensor ein Sendesignal aussendet und anschließend dieser Sensor gemeinsam mit allen anderen Sensoren jeweils ein Reflexionssignal zu diesem einen Sendesignal des einen Sensors aufnehmen. Das Steuergerät schaltet die Sensoren entsprechend, wobei in einem Gesamtzyklus so viele separate Sende- und Empfangszyklen gefahren werden, wie insgesamt Sensoren vorhanden sind, das heißt, jeder Sensor wird einmal in den Sendemodus geschalten.

Nachdem jeder Sensor ein separates Reflexionssignal, das jeweils von unterschiedlichen Punkten des möglichen, im Reflexionsweg sich befindlichen Objekt stammt, liefert, ergibt sich insgesamt eine gegenüber der Anzahl der Sensoren deutlich erhöhte Anzahl an Reflexions- oder Messpunkten des Objekts. Es werden also bezogen auf die gleiche Anordnung der Sensoren an der Stoßstange wesentlich mehr Messpunkte trotz gleichbleibendem Überwachungsbereich aufgenommen, das heißt, man erhält wesentlich mehr lokale Ortsinformationen von einem möglichen Objekt als bei bisher bekannten Abstandswarnsystemen.

Die Sensoren selbst können dabei wie bisher in der Regel vorgesehen in gleichmäßigem Abstand zueinander angeordnet sein. Liegen sie noch dazu alle auf einer gedachten Geraden, also auf gleicher Höhe bezogen auf die Horizontale, so werden insgesamt 2n - 1 separate Sensorsignale geliefert. Bei einer Anzahl von vier Sensoren mit n = 4 erhält man also sieben separate Sensorsignale im Vergleich zu vier Sensorsignalen bei Systemen nach dem Stand der Technik.

Alternativ zur gleichmäßigen Beabstandung der Sensoren können diese auch in ungleichmäßigen Abständen zueinander angeordnet sein, oder Paare von Sensoren ungleichmäßig etc. Die Verteilung kann letztlich beliebig sein, was auch für die höhenmäßige Anordnung der Sensoren gilt, die zum Teil oder alle unterschiedlich hoch bezogen auf die Horizontale positioniert sein können. In diesen Fällen ergeben sich noch mehr Messorte, nachdem - anders bei abstandssymmetrischer und höhengleicher Anordnung - die Messorte nicht zusammenfallen.

Dies kann auch dadurch erreicht werden, dass ein Teil oder alle Sensoren, z.B. am Stoßfänger, unterschiedlich tief angeordnet sind, das heißt die Einbautiefe variiert. Natürlich ist auch eine einheitlich tiefe Anordnung möglich.

Wie beschrieben kann aufgrund der deutlich höheren Ortsauflösung und damit einhergehender Erfassung von deutlich mehr Messpunkten eines Objekts diese in seiner Größe, Ausdehnung oder geometrischen Form wesentlich besser erfasst und abgetastet werden. Eine zweckmäßige Erfindungsausgestaltung sieht infolgedessen vor, dass das Steuergerät zum Ermitteln einer die geometrische Form eines über die Sensorsignale erfassten Hindernisses zumindest genähert wiedergebenden grafischen Darstellung und zum Anzeigen derselben an einem Monitor ausgebildet ist. Dies kann beispielsweise in Form einer zweidimensionalen Liniengrafik oder dergleichen erfolgen. Das Steuergerät ist also in der Lage, anhand der vielen Messpunkte und damit der vielen lokalen Abstandsinformationen zumindest genähert die Lage und Kontur/Form eines möglichen Hindernisses zu ermitteln und beispielsweise in Form einer Linie am Monitor anzuzeigen, wobei es zweckmäßig ist, in der grafischen Darstellung auch die bekannte äußere Kontur des Kraftfahrzeugs oder eines Teils davon wiederzugeben. Das heißt, dem Kraftfahrer wird visualisiert, wie beispielsweise die Heckstoßstange des Fahrzeugs in Bezug auf das Hindernis steht und wie das Hindernis zumindest genähert aussieht. Auf diese Weise ist es auch möglich, dass der Fahrer kontinuierlich erkennen kann, wie sich seine Position zum Hindernis, das in der Regel feststehend ist, ändert, wenn er versucht, um dieses herumzufahren.

Zweckmäßig ist es dabei, wenn in der grafischen Gestaltung ein oder mehrere aktuelle Abstandswerte des Kraftfahrzeugs zum Hindernis anzeigbar sind. Auch hierdurch kann ebenfalls eine kontinuierliche Abstandsänderung visualisiert werden, das heißt die Anzeige passt sich kontinuierlich an den Ist-Zustand an, so dass der Fahrer noch mehr Informationen über die Ist-Situation erhält und er sein weiteres Verhalten noch genauer bestimmen kann.

Als Sensoren können wie beschrieben alle Arten von Sensoren eingesetzt werden, die eine hinreichende Objekterfassung ermöglichen, bevorzugt sind Radarsensoren oder Ultraschallsensoren.

Schließlich kann das Steuergerät ein zu den Sensoren separates Gerät sein. Alternativ kann es auch - oder zumindest die relevanten Steuerungsfunktionen- in einem der Sensoren integriert sein. Damit spart man ein Gerät ein. Welcher der Sensoren den Steuergeräteumfang mit aufnimmt ist beliebig. Bei dem hiermit beschriebenen Konzept könnte man auch von einem Master-Slave-Konzept sprechen. Der Sensor mit dem integrierten Steuergerät wäre dann der Master, während man dann bei den reinen Sensoren von den Slaves sprechen würde.

Neben dem Kraftfahrzeug betrifft die Erfindung ferner ein Verfahren zur Messung des Abstands von an einem Kraftfahrzeug angeordneten Sensoren zu einem benachbarten Objekt, bei dem jeder Sensor ein Sendesignal aussendet, ein vom Objekt reflektiertes Reflexionssignal empfängt und basierend darauf ein separates Sensorsignal, das ein Maß für den Abstand des Sensors zum Objekt ist, liefert, das von einem den Sensorbetrieb steuernden Steuergerät verarbeitet wird. Das erfindungsgemäße Verfahren zeichnet sich dadurch aus, dass das Steuergerät in einem Sende- und Empfangszyklus lediglich einen Sensor zum Aussenden des Sendesignals und zusätzlich zu diesem anschließend alle weiteren Sensoren zum Empfangen von Reflexionssignalen auf Basis des einen Sendesignals ansteuert, wobei zu jedem Reflexionssignal ein Abstandswert ermittelt wird, und wobei das Steuergerät in mehreren Sende- und Empfangszyklen nacheinander alle Sensoren zum Aussenden ansteuert.

Dabei kann über das Steuergerät die geometrische Form eines über die Sensorsignale erfassten Hindernisses zumindest genähert ermittelt und in Form einer grafischen Darstellung an einem Monitor ausgegeben werden, wobei in dieser Darstellung zweckmäßigerweise auch die Kontur des Kraftfahrzeugs oder eine Teils davon eingeblendet wird, wie auch aktuelle Abstandswerte angegeben werden können.

Weitere Vorteile, Merkmale und Einzelheiten der Erfindung ergeben sich aus den im folgenden beschriebenen Ausführungsbeispielen sowie anhand der Zeichnungen. Dabei zeigen:

Fig. 1    eine Perspektivansicht eines erfindungsgemäßen Kraftfahrzeugs,

Fig. 2    eine Prinzipdarstellung einer ersten Anordnungsmöglichkeit der Sensoren,

Fig. 3    eine Prinzipdarstellung einer zweiten Anordnungsmöglichkeit der Sensoren,

Fig. 4    eine Prinzipdarstellung einer dritten Anordnungsmöglichkeit der Sensoren in einer Aufsicht,

Fig. 5    eine Prinzipdarstellung des erfindungsgemäßen Abstandserfassungssystems,

Fig. 6    eine Prinzipdarstellung zur Erläuterung der Abstandserfassung mit vier Sensoren in einer ersten geometrischen Anordnung,

Fig. 7    eine Prinzipdarstellung zur Erläuterung der Abstandserfassung mit vier Sensoren in einer zweiten geometrischen Anordnung,

Fig. 8    eine Prinzipdarstellung zur Erläuterung der Abstandserfassung mit vier Sensoren in einer dritten geometrischen Anordnung, und

Fig. 9    eine Prinzipdarstellung einer Monitoranzeige.

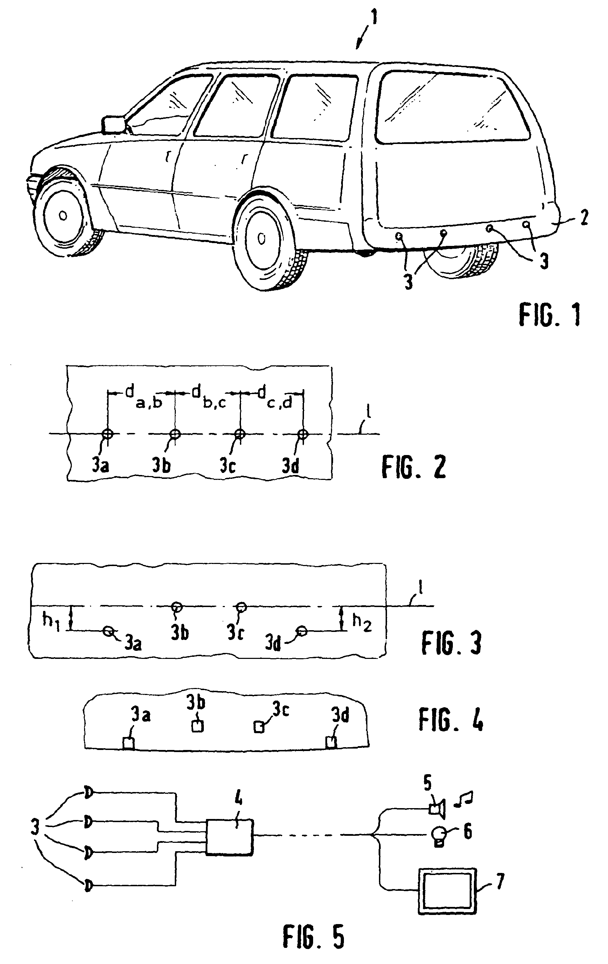

Fig. 1 zeigt ein erfindungsgemäßes Kraftfahrzeug 1, bei dem im Bereich der hinteren Stoßstange 2 mehrere Abstandssensoren 3 über die Stoßstangenlänge verteilt angeordnet sind. Entsprechende Sensoren können auch an der vorderen Stoßstange vorgesehen sein. Über diese Abstandssensoren ist es möglich, den Abstand zu einem sich hinter dem Kraftfahrzeug befindlichen stehenden oder sich selbst bewegenden Hindernis erfassen zu können. Beispielsweise handelt es sich bei den Sensoren 3 um Radarsensoren.

Zu diesem Zweck sind die Abstandssensoren 3, siehe Fig. 5, mit einem Steuergerät 4 verbunden, über das der Sende- und Empfangsbetrieb der Abstandssensoren gesteuert wird. Dieses Steuergerät bzw. seine Steuerfunktionen können auch in einem Sensor integriert sein, es wäre also kein separates Gerät vorgesehen. Die Abstandssensoren senden ein Sendesignal aus und empfangen von einem etwaigen sich im Überwachungsbereich befindlichen Objekt reflektierte Reflexionssignale, anhand welcher die Abstandsbestimmung im Rahmen einer Laufzeitmessung im Verhältnis zu einem Referenzsignal erfolgt. Dabei können die ein Maß für den gegebenen Abstand zum Objekt darstellenden Sensorsignale von den Sensoren 3 selbst erzeugt werden, oder aber in dem nachgeschalteten Steuergerät 4, der dann die entsprechenden auszuwertenden Signale gegeben werden.

Beim erfindungsgemäßen Kraftfahrzeug steuert das Steuergerät 4 den Sende- und Empfangsbetrieb der Sensoren derart, dass jeweils innerhalb eines Sende- und Empfangszyklus nur ein Sensor ein Sendesignal aussendet, und anschließend alle Sensoren in den Empfangsmodus geschalten werden und aus dem gesendeten Sendesignal resultierende Empfangssignale aufnehmen und hieraus die Sensorsignale erzeugt werden bzw. auf dieser Basis die Abstandsbestimmung erfolgt. Hierauf wird Nachfolgend noch eingegangen.

Dem Steuergerät 4 nachgeschaltet sind verschiedene Möglichkeiten, den Fahrer von einem sich nähernden Objekt zu warnen. Dies kann zum einen akustisch erfolgen, wie durch das Lautsprechersymbol 5 dargestellt, oder aber optisch, wie durch das Symbol 6 dargestellt, oder wie insbesondere erfindungsgemäß vorgesehen durch eine grafische Darstellung an einem Monitor 7, worauf ebenfalls noch eingegangen wird.

Fig. 2 zeigt eine erste Anordnungsmöglichkeit von vier Sensoren 3a - 3d. Diese sind alle längs einer gedachten Linie I angeordnet, damit alle in gleicher Höhe. Im gezeigten Beispiel ist der Abstand zwischen zwei Sensoren konstant, das heißt, $d_{a,b} = d_{b,c} = d_{c,d}$. Selbstverständlich besteht die Möglichkeit, diese Abstände auch unterschiedlich zu wählen, das heißt, diese Sensoren unterschiedlich weit voneinander zu beanstanden.

Eine weitere Anordnungsmöglichkeit zeigt Fig. 3. Hier sind die beiden Sensoren 3a und 3d niedriger angeordnet als die Sensoren 3b, 3c, die auf der gedachten Linie I liegen. Dabei besteht die Möglichkeit, $h_1 = h_2$ zu wählen, beide Abstände können aber auch unterschiedlich sein. Natürlich können auch die Sensoren 3b und 3c ungleich hoch angeordnet sein. Die Abstände zwischen den Sensoren können wie in Fig. 2 gezeigt gleich sein, sie können aber zusätzlich zur Höhenanordnung ebenfalls variieren. Die konkrete Anordnung hat Auswirkungen darauf, wie viele Messpunkte effektiv erfasst werden können, worauf im Folgenden eingegangen wird.

Fig. 4 zeigt die Möglichkeit, die Sensoren unterschiedlich tief an der Stoßstange zu positionieren. Die Sensoren 3b und 3c sind tiefer in der Stoßstange angeordnet, als die Sensoren 3a und 3d.

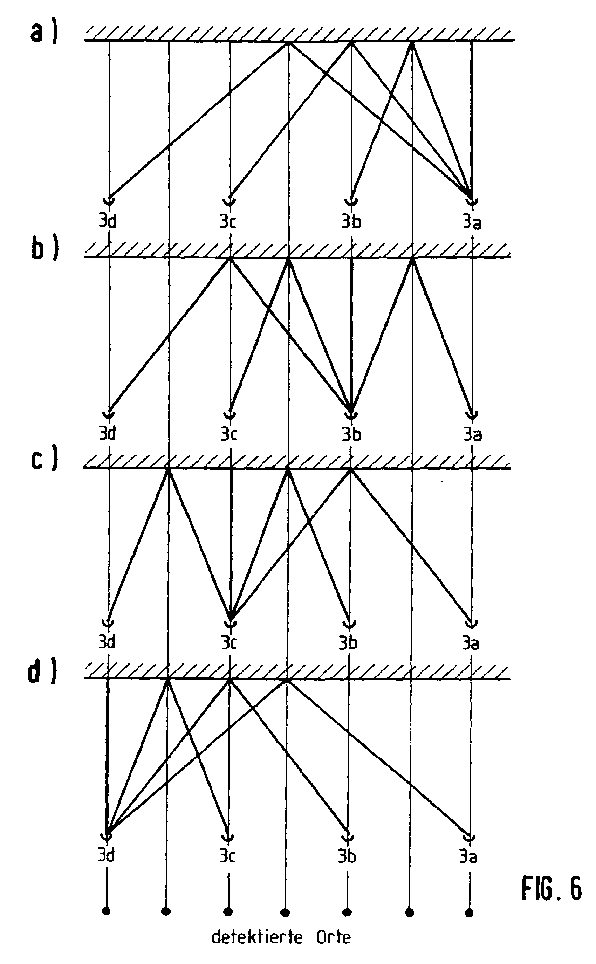

Fig. 6 zeigt eine erste Sensoranordnung umfassend vier Sensoren 3a - 3d, die im erfindungsgemäßen Modus betrieben werden. Nachdem jeweils während eines Sende- und Empfangszyklus nur ein Sensor sendet und anschließend alle Sensoren die Reflexionssignale empfangen, sind insgesamt vier unterschiedliche Zyklen mit jeweils unterschiedlichen Sendesensoren dargestellt.

Wie der mit a) gekennzeichneten Darstellung zu entnehmen ist, sind die vier Sensoren 3a, 3b, 3c, 3d jeweils gleich weit voneinander beabstandet. Sie befinden sich, was nicht näher dargestellt ist, an der Stoßstange des Kraftfahrzeugs aus Fig. 1. Das Kraftfahrzeug nähert sich einem Hindernis 8, im gezeigten Beispiel einer Wand. Ist das System eingeschalten, sendet nun im ersten Sende- und Empfangszyklus der Sensor 3a das Sendesignal. Anschließend wird er wie auch alle anderen Sensoren in den Empfangsmodus geschalten, sofern sich die anderen Sensoren nicht bereits in diesem Modus befinden. Dargestellt sind jeweils die Reflexions- bzw. Empfangssignale, die jeder Sensor empfängt. Der Sensor 3a empfängt das unmittelbar zurückreflektierte Signal. Ausgehend von dem einen Sendesignal empfangen die Sensoren 3b, 3c und 3d jeweils ebenfalls ein Reflexionssignal, nachdem das Hindernis 8 relativ groß ist und das Sendesignal entsprechend reflektiert wird. Ersichtlich sind die Reflexionsorte der jeweiligen sensorspezifischen Reflexions- oder Empfangssignale jeweils unterschiedlich. Nachdem vier Sensoren vorhanden sind, ergeben sich insgesamt vier separate Reflexionsorte am Hindernis 8.

Ist dieser Sende- und Empfangszyklus beendet, wird der nächste Zyklus angestoßen, wie in der Darstellung b) gezeigt. Nun wird der Sensor 3b in den Sendemodus gebracht, er sendet ein Sendesignal aus, anschließend wird er auf Empfang geschalten. Auch hier ergeben sich insgesamt vier hindernisseitige Reflexionspunkte, wobei die Reflexionspunkte der von den Sensoren 3a, 3b und 3c empfangenen Reflexionssignale mit bereits im vorangehenden Zyklus erfassten Reflexionsorten zusammenfallen, neu ist der Reflexionspunkt des vom Sensor 3d erfassten Reflexionssignals. Insgesamt liegen nun bereits fünf hindernisseitige Reflexionsorte vor.

Im nächsten Sende- und Empfangszyklus wird der Sensor 3c als Sender betrieben und anschließend die vier Reflexionssignale erfasst. Ersichtlich fallen auch hier drei Reflexionsorte mit bereits erfassten Reflexionsorten zusammen, der Reflexionsort des vom Sensor 3d empfangenen Reflexionssignals ist wiederum neu. Insgesamt liegen nun sechs separate hindernisseitige Reflexionsorte vor.

Im letzten Sende- und Empfangszyklus wird der Sensor 3d als Sender betrieben, anschließend werden wiederum die vier Reflexionssignale erfasst. In diesem Zyklus kommt nunmehr ein weiterer Reflexionsort hinzu, nämlich der des vom Sensor 3d erfassten Reflexionssignals.

Wie in Fig. 6 dargestellt ergeben sich nun insgesamt sieben hindernisseitige detektierte Orte, bei lediglich vier verwendeten Sensoren.

Bei diesem Ausführungsbeispiel sind wie beschrieben jeweils zwei Sensoren gleich weit voneinander beabstandet. Dies führt dazu, dass Messorte zusammenfallen, auch wenn unterschiedliche Sensoren als Sender betrieben werden. Insgesamt ermöglicht eine solche zur Fahrzeuglängsachse symmetrische Anordnung, maximal 2n - 1 Orte am Hindernis zu detektieren.

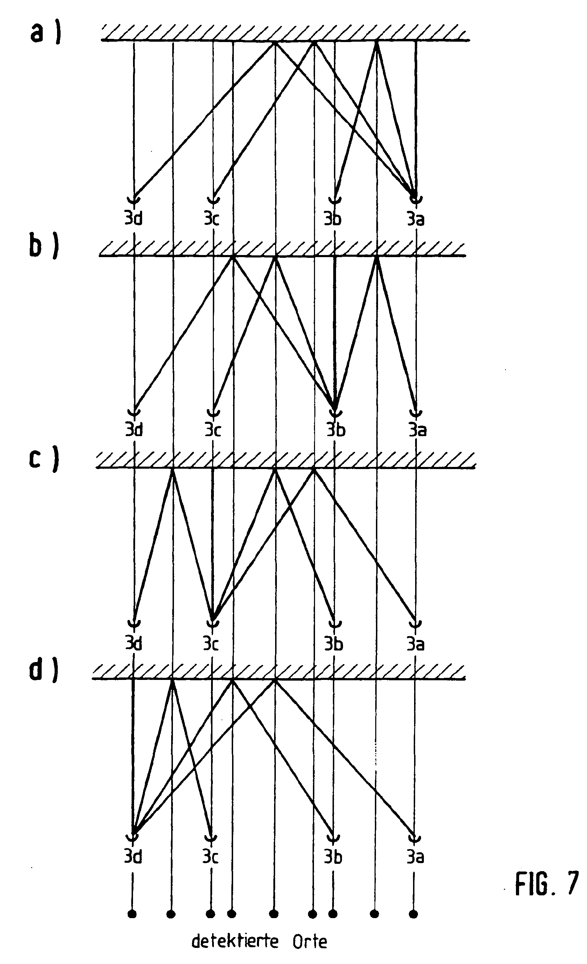

Fig. 7 zeigt eine Anordnung, bei der die Sensoren 3a - 3b wiederum symmetrisch zur Fahrzeuglängsachse angeordnet sind, jedoch variieren die Abstände wie folgt, wobei als Indizes jeweils der einen Sensor individualisierende Buchstabe angegeben ist:

$$d_{a,\,b} = d_{c,\,d},\ d_{a,\,c} = d_{b,\,d},\ d_{a,\,b} \neq d_{b,\,c}.$$

Dargestellt sind jeweils wiederum die vier unterschiedlichen Zyklen, in den jeweils ein Sensor sendet, aber alle die Reflexionssignale erfassen. Aufgrund der teilweise unsymmetrischen Anordnung ergeben sich hier wie aus Fig. 7 anhand der in den Bildteilen a) - d) dargestellten Reflexionsszenarien sowie anhand der gezeigten detektierten Orte, dass insgesamt neun separate, einzeln aufgelöste Messorte am Hindernis 8 detektiert wurden. Allgemein beschrieben können mit einer solchen Anordnung maximal 2n + 1 separate Messorte am Hindernis detektiert werden.

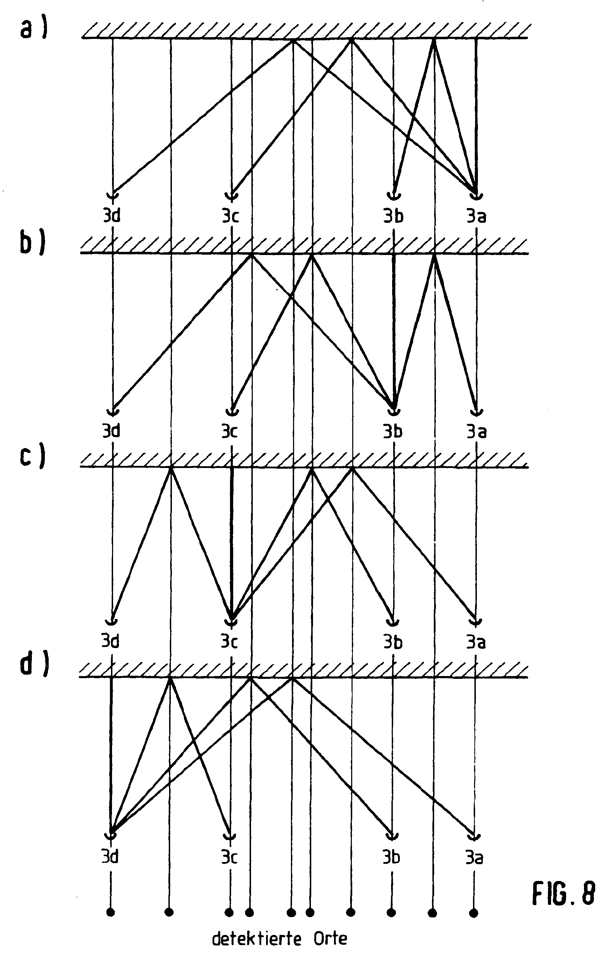

Fig. 8 zeigt schließlich eine asymmetrische Anordnung. Die Sensoren 3a, 3b, 3c und 3d sind so angeordnet, dass die Abstände zwischen allen Sensoren uneinheitlich sind. Für die Abstände gilt:

$$d_{a,\,b} \neq d_{a,\,c} \neq d_{a,\,d} \neq d_{b,\,c} \neq d_{b,\,d} \neq d_{c,\,d}.$$

Dargestellt sind jeweils wieder die vier unterschiedlichen Zyklen a) - d), wobei auch hier im Zyklus a) der Sensor 3a als Sender dient und im Zyklus d) der Sensor 3d als Sender betrieben wird.

Bei der asymmetrischen Anordnung wie hier gezeigt erhält man insgesamt maximal zehn separate Reflexionsorte am Hindernis 8. Allgemein kann die Ortsauflösung durch ½ n (n + 1) beschrieben werden, das heißt dementsprechend viele separate Orte können hindernisseitig aufgelöst werden.

Insgesamt lässt die erfindungsgemäße Betriebsweise eine deutliche Erhöhung der Anzahl an Messorten und damit eine deutliche Erhöhung der Ortsauflösung eines sich im Abtastbereich befindlichen Objekts zu. Dies gilt selbstverständlich auch bei der Erfassung von Hindernissen, die nicht der Form des in den Figuren dargestellten Hindernisses 8 entsprechen, das eine Wand darstellt, die sich über den gesamten Abtastbereich erstreckt, sondern auch bei der Erfassung von Objekten, die kürzer oder in ihrer Form und Geometrie anders sind. Denn auch bei diesen lässt sich lokal gesehen, soweit sie sich im Abtastbereich eines oder mehrerer Sensoren befinden, die Anzahl an aufnehmbaren Messpunkten erhöhen.

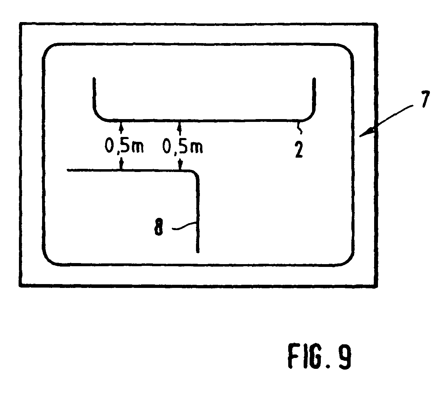

Fig. 9 zeigt schließlich in Form einer Prinzipdarstellung die Möglichkeit, das Messergebnis dem Kraftfahrer am Monitor 7 zu visualisieren. Das Steuergerät 4 ist in der Lage, anhand der detektierten Orte des Hindernisses 8 genähert dessen geometrische Form zu bestimmen und das Hindernis, in Fig. 9 ebenfalls mit 8 bezeichnet, in Form einer Linie darzustellen. Gezeigt ist ferner in Form einer Linie der rückwärtige Umriss der Stoßstange 2 des Kraftfahrzeugs 1. Der Kraftfahrer erhält also so eine bildliche Darstellung der Situation hinter dem Fahrzeug, die ihm einen groben Überblick ermöglicht. Er kann erkennen, wo sich genau das Hindernis befindet, wie es genähert aussieht und wie sein Kraftfahrzeug genähert dazu positioniert ist.

Wie Fig. 9 ferner zeigt besteht die Möglichkeit, Informationen über den ermittelten Ist-Abstand der Stoßstange 2 zum Hindernis 8 anzugeben, vorzugsweise zu den jeweiligen Sensorpositionen. Im Beispiel gemäß Fig. 9 sind beispielsweise zwei Sensoren unmittelbar benachbart zum Hindernis 8, zu diesen beiden ist jeweils der Abstand angegeben, der exemplarisch mit 0,5 m dargestellt ist. Sollte das Kraftfahrzeug bzw. Stoßstange 2 schräg zum Hindernis bzw. zur Reflexionsebene stehen, so wären die jeweiligen Angaben unterschiedlich, nachdem die Sensoren unterschiedlich weit beabstandet wären.

**Patentansprüche**

1. Kraftfahrzeug mit wenigstens drei Sensoren zur Abstandsermittlung zu einem benachbarten Objekt wobei jeder Sensor ein Sendesignal aussendet, ein vom Objekt reflektiertes Reflexionssignal empfängt und basierend darauf ein separates Sensorsignal, das ein Maß für den Abstand des Sensors zum Objekt ist, liefert, und einer den Sensorbetrieb und die Signalverarbeitung steuernden Steuergerät,
**dadurch gekennzeichnet,**
**dass** das Steuergerät (4) in einem Sende- und Empfangszyklus lediglich einen Sensor (3a, 3b, 3c, 3d) zum Aussenden des Sendesignals und zusätzlich zu diesem anschließend alle weiteren Sensoren (3a, 3b, 3c, 3d) zum Empfangen von Reflexionssignalen auf Basis des einen Sendesignals ansteuert, wobei das Steuergerät (4) in mehreren Sende- und Empfangszyklen nacheinander alle Sensoren (3a, 3b, 3c, 3d) zum Aussenden ansteuert.

2. Kraftfahrzeug nach Anspruch 1,
**dadurch gekennzeichnet,**
**dass** die Sensoren (3a, 3b, 3c, 3d) in gleichmäßigem Abstand zueinander angeordnet sind.

3. Kraftfahrzeug nach Anspruch 1
**dadurch gekennzeichnet,**
**dass** ein Teil oder alle Sensoren (3a, 3b, 3c, 3d) in ungleichmäßigen Abständen zueinander angeordnet sind.

4. Kraftfahrzeug nach einem der vorangehenden Ansprüche,
**dadurch gekennzeichnet,**
**dass** alle Sensoren (3a, 3b, 3c, 3d) auf einer gemeinsamen gedachten Geraden (I) angeordnet sind.

5. Kraftfahrzeug nach einem der Ansprüche 1 bis 3,
**dadurch gekennzeichnet,**
**dass** ein Teil oder alle Sensoren (3a, 3b, 3c, 3d) unterschiedlich hoch angeordnet sind.

6. Kraftfahrzeug nach einem der vorangehenden Ansprüche,
**dadurch gekennzeichnet,**
**dass** ein Teil oder alle Sensoren in gleicher oder unterschiedlicher Tiefe angeordnet sind.

7. Kraftfahrzeug nach einem der vorangehenden Ansprüche,
**dadurch gekennzeichnet,**
**dass** das Steuergerät (4) zum Ermitteln einer die geometrische Form eines über die Sensorsignale erfassten Hindernisses (8) zumindest genähert wiedergebenden grafischen Darstellung und zum Anzeigen derselben an einem Monitor (7) ausgebildet ist.

8. Kraftfahrzeug nach Anspruch 7,
**dadurch gekennzeichnet,**
**dass** das Hindernis (8) in Form einer zweidimensionalen Liniengrafik darstellbar ist.

9. Kraftfahrzeug nach Anspruch 7 oder 8,
**dadurch gekennzeichnet,**
**dass** in der grafischen Darstellung auch die äußere Kontur des Kraftfahrzeugs (1) oder eines Teils davon darstellbar ist.

10. Kraftfahrzeug nach Anspruch 9,
**dadurch gekennzeichnet,**
**dass** in der grafischen Darstellung ein oder mehrere aktuelle Abstandswerte des Kraftfahrzeugs (1) zum Hindernis anzeigbar sind.

11. Kraftfahrzeug nach einem der vorangehenden Ansprüche,
**dadurch gekennzeichnet,**
**dass** die Sensoren (3a, 3b, 3c, 3d) Radarsensoren oder Ultraschallsensoren sind.

12. Kraftfahrzeug nach einem der vorangehenden Ansprüche,
**dadurch gekennzeichnet,**

**dass** das Steuergerät (4) in einem der Sensoren integriert oder ein separates Gerät ist.

13. Verfahren zur Messung des Abstands von an einem Kraftfahrzeug angeordneten Sensoren zu einem benachbarten Objekt, bei dem jeder Sensor ein Sendesignal aussendet, ein vom Objekt reflektiertes Reflexionssignal empfängt und basierend darauf ein separates Sensorsignal, das ein Maß für den Abstand des Sensors zum Objekt ist, liefert, das von einem den Sensorbetrieb steuernden Steuergerät verarbeitet wird,
**dadurch gekennzeichnet,**
**dass** das Steuergerät in einem Sende- und Empfangszyklus lediglich einen Sensor zum Aussenden des Sendesignals und zusätzlich zu diesem anschließend alle weiteren Sensoren zum Empfangen von Reflexionssignalen auf Basis des einen Sendesignals ansteuert, wobei zu jedem Reflexionssignal ein Abstandswert ermittelt wird, und wobei das Steuergerät in mehreren Sende- und Empfangszyklen nacheinander alle Sensoren zum Aussenden ansteuert.

14. Verfahren nach Anspruch 13,
**dadurch gekennzeichnet,**
**dass** das Steuergerät die geometrische Form eines über die Sensorsignale erfassten Hindernisses zumindest genähert ermittelt und eine grafischen Darstellung derselben an einem Monitor ausgibt.

15. Verfahren nach Anspruch 14,
**dadurch gekennzeichnet,**
**dass** in der grafischen Darstellung auch die äußere Kontur des Kraftfahrzeugs oder eines Teils davon dargestellt wird.

16. Verfahren nach Anspruch 14 oder 15,
**dadurch gekennzeichnet,**
**dass** in der grafischen Darstellung ein oder mehrere aktuelle Abstandswerte des Kraftfahrzeugs zum Hindernis angezeigt werden.

## Claims

1. Motor vehicle comprising at least three sensors for determining the distance from an adjacent object, wherein each sensor emits a transmission signal, receives a signal reflected by the object and supplies a separate sensor signal on the basis thereof which is a measure of the distance of the sensor from the object, and a control unit controlling the sensor operation and the signal processing, **characterised in that**, in one transmitting and receiving cycle, the control unit (4) activates only one sensor (3a, 3b, 3c, 3d) to emit the transmission signal and then additionally activates all of the other sensors (3a, 3b, 3c, 3d) to receive reflected signals on the basis of the one transmission signal, the control unit (4) activating all of the sensors (3a, 3b, 3c, 3d) to emit a signal in succession in several transmitting and receiving cycles.

2. Motor vehicle according to claim 1, **characterised in that** the sensors (3a, 3b, 3c, 3d) are arranged at uniform intervals.

3. Motor vehicle according to claim 1, **characterised in that** some or all of the sensors (3a, 3b, 3c, 3d) are arranged at non-uniform intervals.

4. Motor vehicle according to one of the preceding claims, **characterised in that** all of the sensors (3a, 3b, 3c, 3d) are arranged on a common imaginary straight line (1).

5. Motor vehicle according to one of claims 1 to 3, **characterised in that** some or all of the sensors (3a, 3b, 3c, 3d) are arranged at different heights.

6. Motor vehicle according to one of the preceding claims, **characterised in that** some or all of the sensors are arranged at the same depth or at different depths.

7. Motor vehicle according to one of the preceding claims, **characterised in that** the control unit (4) is designed to determine a graphic representation at least approximately reproducing the geometric shape of an obstacle (8) detected by the sensor signals and to display this on a monitor (7).

8. Motor vehicle according to claim 7, **characterised in that** the obstacle (8) can be represented in the form of two-dimensional coordinate graphics.

9. Motor vehicle according to claim 7 or claim 8, **characterised in that** the outer contour of the motor vehicle (1) or part thereof can also be represented in the graphic representation.

10. Motor vehicle according to claim 9, **characterised in that** one or more actual distance values of the motor vehicle (1) from the obstacle can be displayed in the graphic representation.

11. Motor vehicle according to one of the preceding claims, **characterised in that** the sensors (3a, 3b, 3c, 3d) are radar sensors or ultrasonic sensors.

12. Motor vehicle according to one of the preceding claims, **characterised in that** the control unit (4) is integrated into one of the sensors or is a separate unit.

13. Method of measuring the distance of sensors arranged on a motor vehicle from an adjacent object, wherein each sensor emits a transmission signal, receives a signal reflected by the object and supplies a separate sensor signal on the basis thereof which is a measure of the distance of the sensor from the object, this sensor signal being processed by a control unit controlling the sensor operation, **characterised in that**, in one transmitting and receiving cycle, the control unit activates only one sensor to emit the transmission signal and then additionally activates all of the other sensors to receive reflected signals on the basis of the one transmission signal, one distance value being determined for each reflected signal and the control unit activating all of the sensors to emit a signal in succession in several transmitting and receiving cycles.

14. Method according to claim 13, **characterised in that** the control unit at least approximately determines the geometric shape of an obstacle detected by means of the sensor signals and displays a graphic representation thereof on a monitor.

15. Method according to claim 14, **characterised in that** the outer contour of the motor vehicle or part thereof is also represented in the graphic representation.

16. Method according to claim 14 or claim 15, **characterised in that** one or more actual distance values of the motor vehicle from the obstacle are displayed in the graphic representation.

**Revendications**

1. Véhicule automobile comportant au moins trois capteurs destinés à déterminer la distance par rapport à un objet voisin, chaque capteur émettant un signal d'émission, recevant un signal de réflexion réfléchi par l'objet et délivrant, sur la base de celui-ci, un signal de capteur séparé qui est une valeur de la distance entre le capteur et l'objet, et un dispositif de commande qui active le fonctionnement du capteur et le traitement du signal,
**caractérisé en ce que** le dispositif de commande (4) active dans un cycle d'émission et de réception uniquement un capteur (3a, 3b, 3c, 3d) pour émettre un signal d'émission et ensuite, en plus de celui-ci, tous les autres capteurs (3a, 3b, 3c, 3d) pour recevoir des signaux de réflexion basés sur le signal d'émission, le dispositif de commande (4) activant dans plusieurs cycles d'émission et de réception successivement tous les capteurs (3a, 3b, 3c, 3d) en vue d'émettre.

2. Véhicule automobile selon la revendication 1, **caractérisé en ce que** les capteurs (3a, 3b, 3c, 3d) sont disposés à égale distance les uns des autres.

3. Véhicule automobile selon la revendication 1, **caractérisé en ce qu'**une partie ou la totalité des capteurs (3a, 3b, 3c, 3d) sont disposés à distance inégale les uns des autres.

4. Véhicule automobile selon l'une quelconque des revendications précédentes, **caractérisé en ce que** tous les capteurs (3a, 3b, 3c, 3d) sont disposés sur une droite imaginaire (1) commune.

5. Véhicule automobile selon l'une quelconque des revendications 1 à 3, **caractérisé en ce qu'**une partie ou la totalité des capteurs (3a, 3b, 3c, 3d) sont disposés à des hauteurs différentes.

**6.** Véhicule automobile selon l'une quelconque des revendications précédentes, **caractérisé en ce que** qu'une partie ou la totalité des capteurs sont disposés à la même profondeur ou à des profondeurs différentes.

**7.** Véhicule automobile selon l'une quelconque des revendications précédentes, **caractérisé en ce que** le dispositif de commande (4) est conçu pour déterminer une représentation graphique, reproduisant au moins de manière approximative la forme géométrique d'un obstacle (8) détecté par l'intermédiaire des signaux de capteur, et pour afficher ladite représentation graphique sur un moniteur (7).

**8.** Véhicule automobile selon la revendication 7, **caractérisé en ce que** l'obstacle (8) peut être représenté sous la forme d'un graphique de courbes bidimensionnelles.

**9.** Véhicule automobile selon la revendication 7 ou 8, **caractérisé en ce que** le contour extérieur du véhicule automobile (1) ou une partie de celui-ci peut aussi être représenté sur la représentation graphique.

**10.** Véhicule automobile selon la revendication 9, **caractérisé en ce qu'**une ou plusieurs valeurs actuelles de la distance entre le véhicule automobile (1) et l'obstacle peuvent être représentées sur la représentation graphique.

**11.** Véhicule automobile selon l'une quelconque des revendications précédentes, **caractérisé en ce que** les capteurs (3a, 3b, 3c, 3d) sont des capteurs radars ou des capteurs à ultrasons.

**12.** Véhicule automobile selon l'une quelconque des revendications précédentes, **caractérisé en ce que** le dispositif de commande (4) est intégré dans l'un des capteurs ou est un dispositif séparé.

**13.** Procédé de mesure de la distance entre des capteurs, agencés sur un véhicule automobile, et un objet voisin, dans lequel chaque capteur émet un signal d'émission, reçoit un signal de réflexion réfléchi par l'objet et délivre, sur la base de celui-ci, un signal de capteur séparé qui est une valeur de la distance entre le capteur et l'objet et qui est traité par un dispositif de commande qui active le fonctionnement du capteur,
**caractérisé en ce que** le dispositif de commande active dans un cycle d'émission et de réception uniquement un capteur pour émettre un signal d'émission et ensuite, en plus de celui-ci, tous les autres capteurs pour recevoir des signaux de réflexion basés sur le signal d'émission, une valeur de distance étant déterminée pour chaque signal de réflexion et le dispositif de commande activant dans plusieurs cycles d'émission et de réception successivement tous les capteurs en vue d'émettre.

**14.** Procédé selon la revendication 13, **caractérisé en ce que** le dispositif de commande détermine au moins de manière approximative la forme géométrique d'un obstacle détecté par l'intermédiaire des signaux de capteur et affiche une représentation graphique de celle-ci sur un moniteur.

**15.** Procédé selon la revendication 14, **caractérisé en ce que** le contour extérieur du véhicule automobile ou une partie de celui-ci est aussi représenté sur la représentation graphique.

**16.** Procédé selon la revendication 14 ou 15, **caractérisé en ce qu'**une ou plusieurs valeurs actuelles de la distance entre le véhicule automobile et l'obstacle sont représentées sur la représentation graphique.

FIG. 1

FIG. 2

FIG. 3

FIG. 4

FIG. 5

FIG. 6

detektierte Orte

a )

3d    3c    3b    3a

b )

3d    3c    3b    3a

c )

3d    3c    3b    3a

d )

3d    3c    3b    3a

detektierte Orte

FIG. 7

a )

3d      3c      3b    3a

b )

3d      3c      3b    3a

c )

3d      3c      3b    3a

d )

3d      3c      3b    3a

detektierte Orte

FIG. 8

FIG. 9